(19) Europäisches Patentamt

European Patent Office

Office européen des brevets

(11) **EP 1 039 412 A1**

(12) **EUROPEAN PATENT APPLICATION**

(43) Date of publication:
**27.09.2000 Bulletin 2000/39**

(51) Int. Cl.$^7$: **G06K 19/06**

(21) Application number: **00106562.2**

(22) Date of filing: **17.11.1994**

(84) Designated Contracting States:
**BE DE ES FR GB IT NL SE**

(62) Document number(s) of the earlier application(s) in
accordance with Art. 76 EPC:
**94118158.8 / 0 713 195**

(71) Applicant:
**MINNESOTA MINING AND MANUFACTURING
COMPANY
St. Paul, Minnesota 55133-3427 (US)**

(72) Inventor: **Schenke, Kay-Uwe
41466 Neuss (DE)**

(74) Representative:
**Bird, William Edward et al
Bird Goen & Co.,
Vilvoordsebaan 92
3020 Winksele (BE)**

Remarks:
This application was filed on 27 - 03 - 2000 as a
divisional application to the application mentioned
under INID code 62.

(54) **Remote identification system**

(57) A system for remote identification of objects, an identification marker for use in the system, a method of remote identification of objects and a device for generating a magnetic field for use with the invention.

In the system for remote identification of objects each object has an identification marker (1), said marker (1) including at least one elongate soft ferromagnetic element (3), each said object being arranged to pass through an interrogation zone (12), said system comprising:

means (10,11) for generating a magnetic field in said interrogation zone (12) having a magnetic field vector with a substantially constant magnitude,
means (10,11) for varying the relative orientation between the magnetic field vector and said object; and
means (11) for detecting a change in the magnetising direction of the elongate soft ferromagnetic elements (3).

The marker (1) includes a plurality of elongate soft ferromagnetic elements (3) arranged in a spatial relationship to each other to define a code. Each of the soft ferromagnetic elements (3) may be provided with a keeper or control element which is magnetically coupled thereto.

The field generating means (10,11) generates a magnetic field having a substantially constant magnitude in an interrogation zone (12). The orientation of the magnetic field vector is varied. Means (10,11) are provided for determining the magnitude of the magnetic field.

FIG 2

EP 1 039 412 A1

**Description**

The present invention relates to a system for remote identification of objects, an identification marker for use in the system, a method for remote identification of objects, a device for generating a moving magnetic field for use with the invention and a detection device.

Background of the Invention

There is a general need for remote identification of objects or persons, e.g. personnel, part finished goods in a manufacturing unit, articles for sale in a shop to prevent pilfering and waste materials which may need to be sorted in accordance with material types, age, size or quality.

FR-A-763681 describes a system for remotely identifying metal and/or magnetic objects.

From EP-A-0 330 656 a system for remote sensing of objects is known which includes a marker which consists of three elongate strips of different lengths made from magnetostrictive ferromagnetic material and fixed to a substrate. Each of the strips has a different frequency of vibration when excited by an oscillating magnetic field. The oscillations of the individual strips at different frequencies are then detected by detection coils. This system has the disadvantage that the vibration of the strips of magnetic material may be influenced by the pressure of other objects against them. Further, when used with articles in a shop it is possible for fraudulent purchasers to suppress the vibrations by pressing on the marker and thus prevent detection.

A further system is known in which a marker is provided including a 64 bit read only memory and a coil as receiving and broadcasting antenna. When radio waves are beamed towards the marker the radio waves are picked up by the antenna cod which provides sufficient energy to drive the chip. The chip then generates an identification code which is retransmitted via the antenna in the form of radio waves. The radio waves sent from the marker are received and decoded by a remote reader. This system requires the provision of a relatively expensive integrated circuit with each marker as well as the necessary antenna which may be subject to mechanical damage in use. Further, the typical reading distances are between 40 to 90 centimetres which is too short for many applications.

Optical bar code reading systems are widely used for identification of objects. Such systems have the disadvantage that the optical bar code may be obscured by dirt or other objects and the identification code is easy to falsify or reproduce.

Summary of the Invention

1st aspect of the invention: a marker for a remote identification system comprising: a plurality of elongate soft ferromagnetic elements fixedly arranged in a pre-formed spatial relationship to each other, said spatial relationship being pre-selected to define a code; said elongate soft ferromagnetic elements each having a low magnetic resistance (high magnetic susceptibility) and being separated from each other by areas of high magnetic resistance (low magnetic susceptibility); and each of said elongate soft ferromagnetic elements having at least one state in which the magnetising direction of said elongate soft ferromagnetic element is reversible when the relative orientation between said marker and a magnetic field vector of a magnetic field having a substantially constant magnitude is varied.

2nd aspect of the invention: the marker according to the 1st aspect, wherein said elongate soft ferromagnetic elements are arranged in a plane.

3rd aspect of the invention: the marker according to the 1st or 2nd aspect, wherein said elongate soft ferromagnetic elements are in an angular relationship to each other, the angular separations between the elongate soft ferromagnetic elements defining said code.

4th aspect of the invention: the marker on any of the 1st to 3rd aspects, wherein said elongate soft ferromagnetic elements are arranged parallel to each other, the linear separations of said soft ferromagnetic elements defining said code.

5th aspect of the invention: the marker according to the 3rd aspect, wherein said soft ferromagnetic elements 3 are arranged radially.

6th aspect of the invention: the marker according to any of the 1st to 5th aspects, wherein said code is a self-clocking code.

7th aspect of the invention: the marker according to any of the 1st to 5th aspect, wherein at least one of said elongate soft ferromagnetic elements is magnetically coupled to a keeper element.

8th aspect of the present invention: a system for remote identification of objects, each said object being provided with an identification means and being disposed to pass through an interrogation zone, said identification means including at least one elongate element of a soft ferromagnetic material, said soft ferromagnetic elongate element having a low magnetic resistance (high magnetic susceptibility) and being surrounded by an area of high magnetic resistance (low magnetic susceptibility), comprising: means for generating a magnetic field having a magnetic field vector with a substantially constant magnitude in said interrogation zone; means for varying the relative orientation between said magnetic field vector and said object in said interrogation zone; and means for detecting a change in the magnetising direction of said at least one elongate soft ferromagnetic element.

9th aspect of the invention: the system according to the 8th aspect, wherein said identification means includes a plurality of elongate soft magnetic elements arranged in a pre-formed spatial relationship to each other, said elongate soft magnetic elements being separated from each other by areas of high magnetic resistance (low magnetic susceptibility).

10th aspect of the invention: the system according to the 8th or 9th aspect, wherein the orientation of said magnetic field vector is varied smoothly and continuously in said interrogation zone.

11th aspect of the invention: the system according to the 8th or 9th aspect, wherein the orientation of said magnetic field vector is varied in a predetermined sequence of discrete orientations in said interrogation zone.

12th aspect of the invention: the system according to any of the 8th to 11th aspects, wherein said magnetic field is a rotating field.

13th aspect of the invention: the system according to any of the 8th to 12th aspects, wherein said magnetic field vector oscillates spatially through a predetermined angle.

14th aspect of the invention: the system according to any of the 8th to 13th aspects, further comprising means for determining the orientation of said magnetic field vector.

15th aspect of the invention: the system according to any of the 8th to 14th aspects, further comprising means to determine the magnitude of said magnetic field vector.

16th aspect of the present invention: a method of remote identification of objects, each object being provided with an identification means and being disposed to pass through an interrogation zone, said identification means including at least one elongate element of a soft ferromagnetic material, said elongate soft magnetic element having a low magnetic resistance (high magnetic susceptibility) and being surrounded by an area of high magnetic resistance (low magnetic susceptibility), comprising the steps of: generating a magnetic field having a magnetic field vector within said interrogation zone, said magnetic field vector having a substantially constant magnitude; varying the relative orientation between said magnetic field vector and said object in said interrogation zone, and detecting a change in the magnetising direction of said elongate soft ferromagnetic element.

17th aspect of the invention: the method according to the 16th aspect, wherein said identification means includes a plurality of elongate soft ferromagnetic elements, said elongate soft ferromagnetic elements being arranged in a spatial relationship to each other which defines a code, said elongate soft ferromagnetic elements being separated from each other by areas of high magnetic resistance (low magnetic susceptibility) and said detecting step includes detecting the changes in magnetising direction of said elongate soft ferromagnetic elements in sequence.

18th aspect of the invention: the method according to the 16th or 17th aspect, wherein the orientation of said magnetic field vector is varied continuously and smoothly in said interrogation zone.

19th aspect of the invention: the method according to the 16th or 17th aspect, wherein the orientation of said magnetic field vector is varied in said interrogation zone in a predetermined series of discrete orientations.

20th aspect of the invention: the method according to any of the 16th to 19th aspects, wherein said magnetic field vector is rotated.

21st aspect of the invention: the method according to any of the 16th to 20th aspects, wherein said magnetic field vector is oscillated spatially though a predetermined angle.

22nd aspect of the present invention: a device for generating a magnetic field within a predetermined interrogation zone, comprising: means for generating a magnetic vector of said magnetic field having a substantially constant magnitude; means for varying the orientation of said magnetic field vector within said interrogation zone; and means for determining the magnitude of said magnetic field vector.

23rd aspect of the invention: the generating device according to the 22nd aspect, further comprising at least one coil, the magnetic field generated by said coil defining said interrogation zone, and a controller for supplying electric currents to said coil.

24th aspect of the invention: the generating device according to the 23rd aspect, wherein said coil includes thee pairs of opposed and mutually orthogonal coils.

25th aspect of the invention: generating device according to the 23rd or 24th aspect, wherein said controller is adapted to supply electric currents to said coils to vary the orientation of said magnetic field vector continuously and smoothly in said interrogation zone.

26th aspect of the invention: the generating device according to the 23rd or 24th aspect, wherein said controller is adapted to supply electric currents to said coils to vary the orientation of said magnetic field vector in a predetermined sequence of discrete orientations in said interrogation zone.

27th aspect of the invention: the generating device according to any of the 23rd to 26th aspects, wherein said controller is adapted to supply electric currents to said coils to generate a rotating magnetic field.

28th aspect of the invention: the generating device according to any of the 23rd to 27th aspects, wherein said controller is adapted to supply electric currents to said coils to generate a magnetic field which oscillates spatially through a predetermined angle.

29th aspect of the invention: the generating device according to any of the 22nd to 28th aspects, further comprising means to determine the orientation of said magnetic field vector in said interrogation zone.

The invention can provide the advantages of an identification means for an object which includes a code having an information content similar to a bar code without having to use customised integrated circuits or antenna coils. Further, the identification of the marker is not disturbed by dirt or other objects which would prevent an optical bar code reading system from functioning properly. The marker can also be made optically neutral so that it is difficult to determine the presence of the marker or the code which it carries. Further, it is possible to detect the marker at distances of 1 meter or more so that even large objects may be made identifiable by attachment of a marker in accordance with the invention.

Further advantages and embodiments are described in the following with respect to the drawings which include:

Brief Description of the Drawings

Fig. 1 shows an identification marker in accordance with an embodiment of the present invention,
Fig. 2 shows an interrogation zone in accordance with an embodiment of the present invention,
Fig. 3 shows identification pulses produced by an identification system in accordance with an embodiment of the present invention,
Fig. 4 shows a schematic representation of the trajectory of the magnetic field vector produced by a magnetic field generating means in accordance with an embodiment of the present invention,
Fig. 5 shows a magnetisation/magnetic field (M-H) characteristic of a soft ferromagnetic material suitable for use with the remote identification system of the present invention,
Fig. 6 shows a block diagram of a means for generating a magnetic field and receiver circuitry in accordance with an embodiment of the present invention,
Figs. 7 to 10 show further embodiments of a marker in accordance with the present invention, and
Figs. 11A to 11F show markers for use with the present invention.

Detailed Description of the Preferred Embodiments

In the following the invention is described in detail with respect to a planar arrangement of coded information but the invention is not restricted thereto. The invention also includes a two dimensional linear or a three dimensional sequence of coded information, the means for generating the magnetic field therefor and means for detecting the code.

Fig. 11A shows schematically a marker 1 similar to that known from US-A-3631442. It consists of an elongate element 3 of soft ferromagnetic material on a support 2. The elongate soft ferromagnetic element 3 has the property of reaching saturation at low magnetic field strengths. Suitable soft magnetic materials have a low coercive force and a high permeability (high susceptibility), e.g. Permalloy. It is preferable but not necessary for the invention if the ratio of the length of an elongate element 3 to the square root of its cross-sectional area is 150 or more. The support 2 has preferably a high magnetic resistance (low magnetic susceptibility) with respect to the elongate element 3. The support is preferably non-magnetic, e.g. paper, plastic or aluminium. Whereas conventional systems having soft ferromagnetic elements or strips as identification for objects use oscillating magnetic fields which generate pulses in detecting coils when the magnitude of the magnetic field goes below the coercive force of the elongate elements (approx. zero field), a first preferred embodiment of the present invention includes providing an identification system having an object with a marker 1 including at least one elongate soft ferromagnetic element 3 (with or without a control or keeper element), said object being disposed to pass though an interrogation zone in which a magnetic field having a magnetic field vector 20,20' which has a substantially constant magnitude is generated, and varying the orientation of the identification marker 1 with respect to the magnetic field vector 20,20'. Any change in magnetising direction of the soft ferromagnetic element can be detected by a detection system adjacent to the interrogation zone.

When the marker 1 as shown in Fig. 11A is placed in a substantially uniform magnetic field of sufficient intensity and whose magnetic vector 20 has a particular first direction, the elongate element 3 will be magnetised along its own longitudinal axis in the direction of the component of the magnetic field vector 20 in this direction. If the orientation of the magnetic field vector 20 is changed to a second direction 20' such that it sweeps though a direction perpendicular to the longitudinal axis of the elongate soft ferromagnetic element 3, the magnetised direction of this elongate element 3 will reverse. The elongate element 3 now has a component of the magnetic field vector 20' along the longitudinal axis of the soft ferromagnetic element 3 but in the reverse direction. As the material is soft ferromagnetic the reversal will occur shortly after or simultaneously with the movement of the magnetic field vector though the direction perpendicular to the longitudinal axis of each relevant elongated element 3. By the choice of suitable materials with magnetic properties similar to those indicated below, and/or using a high field magnitude, the reversal of magnetic direction of the elongate soft ferromagnetic element 3 can be made to occur within a very short period of time, so that a detection coil placed in the region of the marker 1 would detect a narrow pulse of induced voltage created by the change in magnetic orientation of the particular elongate element 3. Complete reversal of the magnetised direction of the elongate elements 3 is not necessary provided the characteristic pulses are generated. An individual pulse normally has a wide frequency spectrum.

A marker 1 for use with the first embodiment of the invention may be applied to an article for sale in a shop. When the article is purchased the identification on the article is eliminated by removing the marker from the article, by destroying the magnetic properties of the elongate element 3, e.g. by high temperature induced by a focused laser beam or by other means. On leaving the shop the customer passes though an interrogation zone of the kind described above. Any articles having non-cancelled markers generate pulses in the associated detection system.

Modifications of conventional marker 1 for use with the first embodiment of the invention are shown in Figs. 11B to F. These markers are known and they are not described in detail here. The marker 1 of Fig. 11B is known in principle from US-A-3665449. Adjacent to the elongate soft ferromagnetic element 3 is a keeper or control element 5 having remanent magnet properties and magnetically coupled to the elongate soft magnetic element 3 because of its close proximity. The magnetic material of the keeper element 5 has preferably a higher coercive force and saturation flux density than that of the soft magnetic material. The keeper element should preferably not become saturated in the magnetic field required for detection of the marker 1. As long as the keeper element is magnetised it influences the elongate element 3 so that a change of magnetic direction of the elongate element 3 can not occur. Complete suppression of magnetic reversal is not necessary provided the pulses generated in the detecting coils differ sufficiently to be distinguished from each other. The keeper element 5 may also consist of a relatively wide laminate of a soft ferromagnetic 5' and a remanent material 5" as described in US-A-4746908 and shown schematically in Fig. 11C. If the marker 1 is placed in a powerful decreasing oscillating magnetic field the keeper element 5 is demagnetised and the elongate element 3 can now generate pulses in the detection system described with respect to Fig. 11A. When used with articles in a shop to prevent pilfering, the keeper element 5 is first de-magnetised. After purchase it is magnetised so that the marker 1 does not activate the detection system.

The marker shown in Fig. 11D is known from US-A-4746908. It consists of a relatively large piece of soft ferromagnetic material 3,3' and keeper elements 5,5' which have a magnetic pattern. This marker 1 works on the principle that a large area of soft magnetic material produces little or no pulses. Accordingly when the keeper elements 5,5' are demagnetised the soft ferromagnetic material 3,3' does not produce pulses. When the keeper elements 5,5' are magnetised they cancel out the area of soft ferromagnetic material lying beneath them leaving an active elongate soft ferromagnetic element 3.

The marker 1 shown in Fig. 11E is known in principle from US-A-3983552. Instead of placing the keeper element 5 alongside the elongate soft magnetic element 3 the two are superimposed.

The areas of the keeper element 5 and the soft magnetic element 3 may be the same and the two may be laminated together. Depending on the relative size and magnetic strengths of the keeper 5 and the soft ferromagnetic element 3, pulses may be suppressed or distorted which can be used for detection purposes.

The marker shown schematically in Fig. 11F is known from US-A-3747086 and consists of an elongate soft ferromagnetic element 3 and two keeper elements 5,5' having differing remanent magnetic properties. Depending upon the magnetic state of the keeper elements 5 and/or 5' the nature of the pulses generated by the elongate element 3 can be used for detection purposes.

In the first embodiment of the invention conventional markers 1 are used in a system including means to generate a magnetic field having a substantially constant magnitude and the markers are detected by varying the relative orientation of the marker 1 and magnetic field vector. The detection system may be conventional as described in US-A-4746908, 3983552, 3747086 or 3665449 but is preferably the detection system in accordance with the present invention.

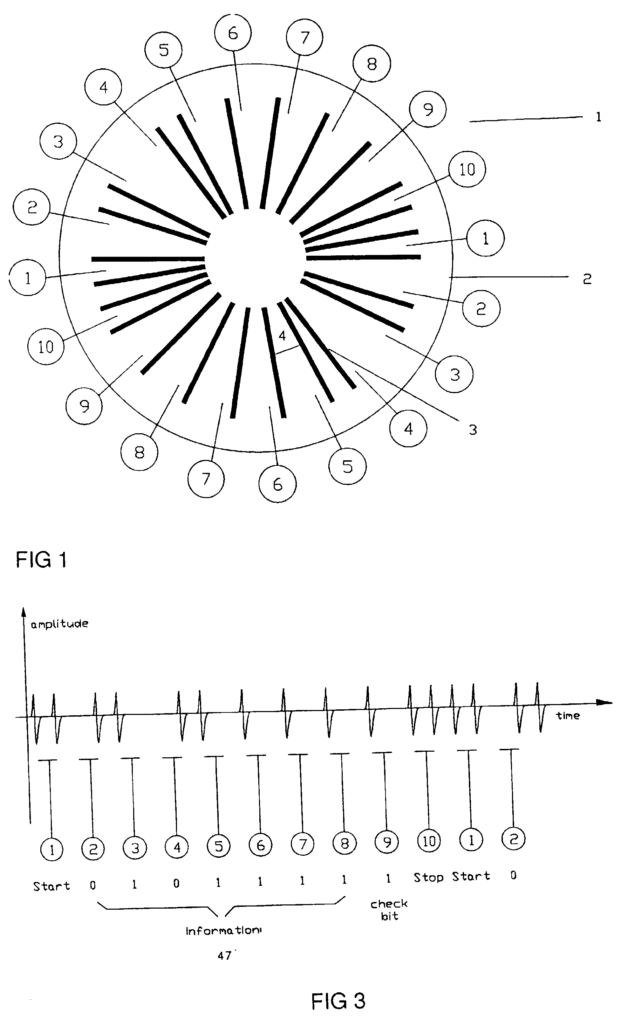

With reference to Fig. 1 a second preferred embodiment of the present invention includes a marker 1 having a series of soft ferromagnetic elongate elements 3 arranged radially and magnetically isolated from each other. The materials used may be similar to those described with respect to Fig. 11A. The soft ferromagnetic elements 3 have a low magnetic resistance, i.e. they have a high relative permeability or high magnetic susceptibility, $\chi_m$. The soft ferromagnetic elements may be adequately magnetically isolated from each other by separating them by areas of high magnetic resistance (low relative permeability or low magnetic susceptibility), i.e. non-magnetizable or negligibly magnetizable material. It is preferable but not necessary for the invention if the ratio of the length of an elongate element 3 to the square root of its cross-sectional area is 150 or more. The soft ferromagnetic elements may be part of, or fixed to a support 2. The angle 4 between any two of the elongate elements 3 has the function of defining a part of a code, i.e. the differing angles 4 between any two of the elongate elements 3 can be detected and represent an identification code. It is sufficient if the elongate elements 3 are arranged in part of a circle, e.g. a semicircle. If a full circle is used it is preferable if an elongate element 3 in one semicircle does not have the same orientation as an elongate element 3 in the opposing semicircle. This may be achieved by differing angular separations enabling different coding techniques such as phase shift keying. For example, if two different angles of 5.5° and 8.5° are chosen to represent a binary code, the axes of any two elongate elements 3 in two different semicircles would be at least 0.5° apart independent of the value the code represents.

The identification marker 1 shown in Fig. 1 is of the radial type but in accordance with the present invention the elongate soft ferromagnetic elements 3 may be arranged in any spatial arrangement which is suitable for generating an identification code. In particular it is not necessary that the elongate elements 3 are arranged radially. In accordance with the third embodiment of the invention the elongate elements 3 may be distributed in a plane in any manner which maintains the angular differences between them as shown schematically in Fig.7.

If a marker 1 with a spatial orientation of elongate soft ferromagnetic elements 3 is placed in a magnetic field having a magnetic field vector of a substantially constant magnitude but varying orientation, detection coils placed near the marker 1 will detect a sequence of pulses comprising pulses generated from each individual elongate element 3 when the field sweeps through a direction which is substantially perpendicular to the longitudinal axis of the relevant elongate element 3. Each such pulse generally has a wide but well defined frequency spectrum and may be distinguished from random noise pulses.

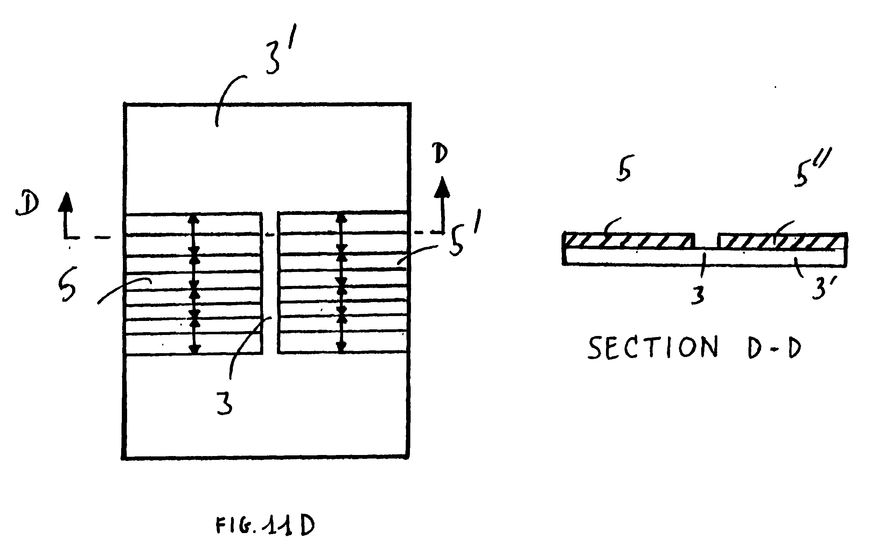

A fourth embodiment of the invention includes a linear arrangement of elongate elements 3 similar in appearance to a conventional linear optical bar code as shown schematically in Fig. 8. In this fourth embodiment the distances 4 shown in Fig. 8 between the elongate elements 3 define the code. Further, the invention is not limited to a 2-dimensional marker 1 but rather the elongate elements 3 may be arranged in a 3-dimensional matrix or on the sides of a three dimensional object.

The angular spacing 4 of the elongate elements 3 shown in Figs. 1 or 7 or the linear distance 4 shown in Fig. 8 may be chosen to represent either 1 or 0 of a binary system so that the number of individual elongate elements available on a marker is equivalent to the number of bits of information which may be stored. The invention is not however limited to a binary system. For instance the code could be a presence/absence single width bar code of the kind described in EP-A-0472842.

A 5° angular difference 4 of the elongate elements 3 shown in Fig. 1 or 7 may be easily distinguished by the detection device in accordance with the present invention so that the marker may have 36 individual elongate elements and thus a storage capacity of 36 bits. This is adequate to be able to code items individually. For instance, the material used in the object may be codified so that it may be sorted later in accordance with the identified code in a waste material sorting device. The minimum size of the angular or linear difference 4 of the elongate elements 3 of the marker 1 which can be detected is determined by size and material of the elongate elements 3, the detection coil arrangement and the frequency of operation. Modifications to the materials and frequencies may render an information storage of the order of 256 bits.

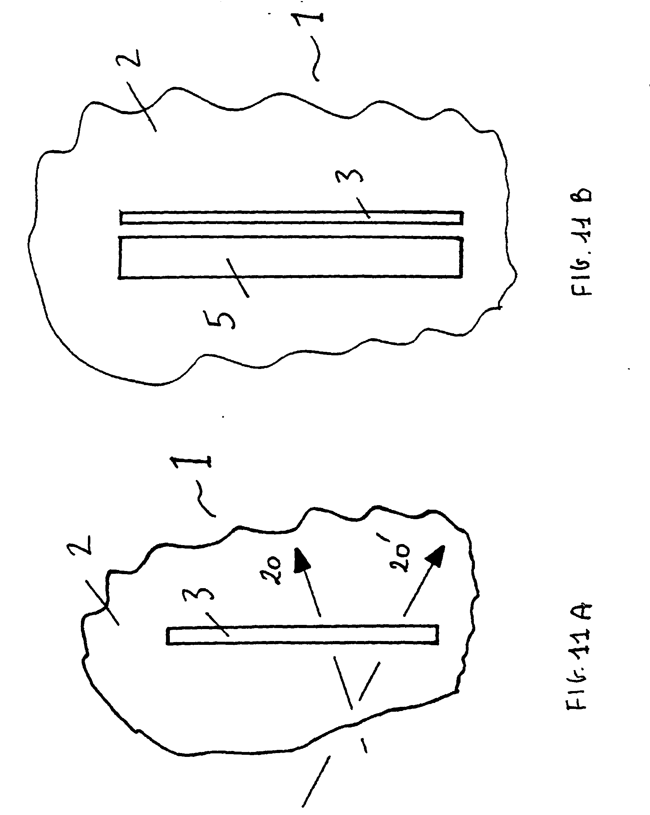

In the first to fourth embodiments of the invention the soft ferromagnetic elongate elements 3 are arranged in a plane. The soft ferromagnetic elements 3 may be self supporting. The soft ferromagnetic elongate element(s) 3 may be printed onto the support 2 or may be rods or strips of soft ferromagnetic material fixed to the support 2 by conventional means. The support 2 is preferably made from a material with a high magnetic resistance (low magnetic susceptibility) with respect to the elongate soft ferromagnetic elements 3. The support is preferably non-magnetic, e.g. paper, plastic, aluminium. The elongate elements 3 may be made from a soft ferromagnetic material such as amorphous magnetic metal alloys having the property of being relatively easily magnetizable along the longitudinal direction of the elongate element 3 when placed in a magnetic field having a component parallel to this first direction and of reversing the magnetisation direction when a component of the magnetic field is in the direction which is the reverse of the first direction. It is preferable that the soft ferromagnetic material is chosen so that the magnetising direction of the elongate elements 3 can be changed easily and rapidly. The term „ferromagnetic material" includes conductive and non-conductive ferromagnetic materials, e.g. ferrite's, amorphous metal alloys. With reference to Fig. 5 magnetic properties for such materials are preferably a saturation flux density ($B_s$) of a magnetic induction $B$ (= $\mu_0$ (H+M)) of 0.5 to 1.0 Tesla, a coercivity ($H_c$) of about 0.025 to 1 A/cm, as well as a relative permeability ($\mu_{rel} = \Delta B/\Delta H|_{H=0}$) of greater than 10,000. Suitable materials may have a permeability of 250,000 or even 400,000. It is also advantageous if the material has some remanence, in particular in the range 50 to 95% of the magnetic saturation. Permalloy is a suitable material. Further suitable materials are VITROVAC 6030Z made by the company VAC, Hanau and alloys 2705M and 2714Z made by Allied Signal Corp., USA. Fig. 5 only shows the magnetisation/magnetic field (M-H) characteristic schematically. The soft ferromagnetic property of the material is represented by the M-H curve enclosing a small area Saturation is shown as a perfect abrupt change from a linear increasing function to the saturated state. Actual materials suitable for use with the invention may differ from these highly schematised characteristics.

The markers 1 described with respect to the preferred second to fourth embodiments represent non-volatile memory devices. They can only be altered by destroying part of the code. This may be done by cutting out one or more of the elongate elements 3, by etching, by raising the temperature to a point that irreversible loss of magnetic properties occurs, e.g. by a focused laser beam, or by high mechanical pressure. A marker 1 can be made programmable by adapting the elongate soft ferromagnetic elements so that they lose their ability to reverse their magnetised direction without causing permanent damage. This may be done by applying mechanical pressure or temperature to temporarily destroy the magnetic properties of a soft magnetic element 3. In particular it can be achieved by providing keeper elements associated with one or more of the elongate magnetic elements 3. By changing the state of the keeper element the associated elongate element 3 can be activated or de-activated. The design and construction of suitable conventional keeper elements described with reference to Figs. 11B to F and described in more detail for instance in US-A-3665449, US-A-3747086, US-4746908, US-3631442 and US-3983552, the disclosures of which are incorporated by reference may be applied to the marker 1 described with respect to Figs. 1 and 8, for instance:

In a preferred fifth embodiment of the invention as shown in Fig. 9 certain of the elongate elements 3 are provided with a magnetic keeper element 5 (shown individually in Figs. 11A,B) or 50 (shown individually in Figs. 11C), 51 (shown individually in Fig. 11C), or keeper elements 5,5',5" (shown individually in Fig. 11F) which is sufficiently close to be magnetically coupled to the adjacent elongate element 3 but sufficiently far away from all other soft ferromagnetic elements that these are magnetically isolated from the keeper element 5,50,51. The keeper element 5,50,51 is preferably made of a material with remanent magnetic properties. The keeper element 5,50,51 preferably includes a material having a higher coercivity and a higher saturation flux density than the material of the elongate element 3. The keeper element 5,50,51 may include gamma $Fe_2O_3$, Vicalloy, Remendur, Arnochrome III made by Arnold Engineering, USA or any similar material. As long as the keeper element 5 is magnetised it prevents the change in the magnetic direction of the associated elongate element 3 or at least severely alters the change so that the pulses detected can be distinguished from each other. If the keeper element 5 is placed in a powerful (above the coercive force of the keeper element 5) but decreasing oscillating magnetic field it becomes demagnetised and the associated elongate element 3 may then respond to an external magnetic field. The keeper element 50 may also be a relatively wide laminate of the soft ferromagnetic and the remanent material. The keeper element 51 may be superimposed on, or lie underneath the elongate soft ferromagnetic element 3 and preferably includes a remanent material as described for keeper element 5.

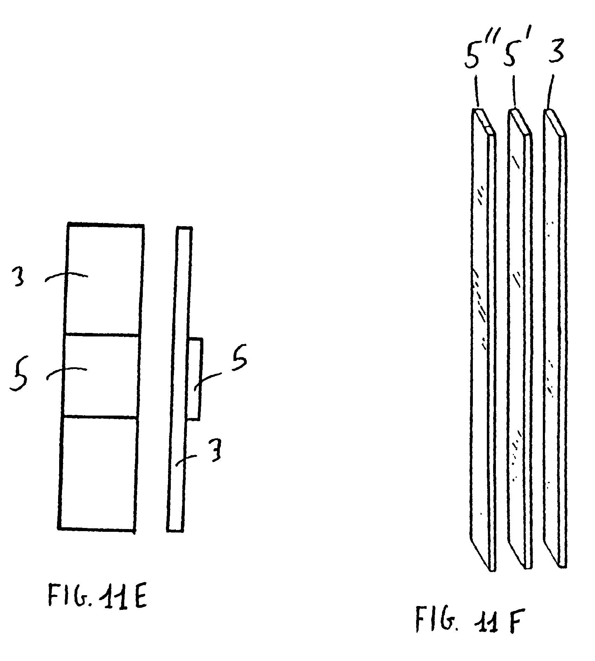

In a preferred sixth embodiment of the invention the soft ferromagnetic material may be provided in sheet form as shown in Fig. 10. The elongate elements 3 of the soft ferromagnetic sheet 6 are defined by the spaces between the keeper elements which may be patterned magnetic areas 5 (shown individually in Fig. 11D). Any of the elongate soft magnetic element and/or keeper constructions described with respect to the first embodiment may be applied to the constructions of the fifth and sixth embodiments. The programmable markers described with respect to the fifth and sixth embodiments may be applied to any of the constructions described with respect to the second to fourth embodiments.

Suitable soft ferromagnetic and keeper materials may be chosen so that their Curie temperatures are in excess of 200°C. Below the Curie temperature the marker experiences no loss of magnetic properties so that it can be detected correctly. The marker 1 may experience considerably higher temperatures for a short time during manufacture provided the magnetic properties are not affected irreversibly. Suitable soft and remanent ferromagnetic materials can be chosen which experience irreversible changes in magnetic properties only above 350° C. Accordingly the marker 1 may also be included within an injection moulding, blow moulding or other plastic processing machine so that the marker can be moulded into any object produced by such machines.

The elongate soft ferromagnetic elements 3 and the keeper elements 5 shown in Figs. 1, 7 to 11 may be attached to the support 2 or directly to the objects in any known conventional way such as with adhesive, by printing, by taping or fixing with mechanical means. The marker shown in Figs. 1, 7 to 11 may be smaller than 10 millimetres or greater than 10 centimetres in diameter. The information stored within the marker is sufficiently large that the date of manufacture can also be coded into the marker as well as the product type and the material from which the product is made. Thus, objects which have to be recycled such as bottles, crates or reels can be monitored and removed from distribution after a certain time period.

The magnetic field generating device 10,11 in accordance with a preferred seventh embodiment of the present invention and for use with any of the embodiments of the invention is constructed so that the magnetic field vector has a substantially constant magnitude and its orientation within the interrogation zone varies smoothly and continuously or in a sequence of a plurality of discrete orientations. Any active soft ferromagnetic elongate element 3 of a marker 1 in accordance with the first to sixth embodiments will generate a single polarity pulse (only positive or negative) or a complete pulse (positive and negative waves) of the kind shown in Fig.

3 in the detecting coils when it experiences the reversal of the component of the magnetic field along its longitudinal axis.

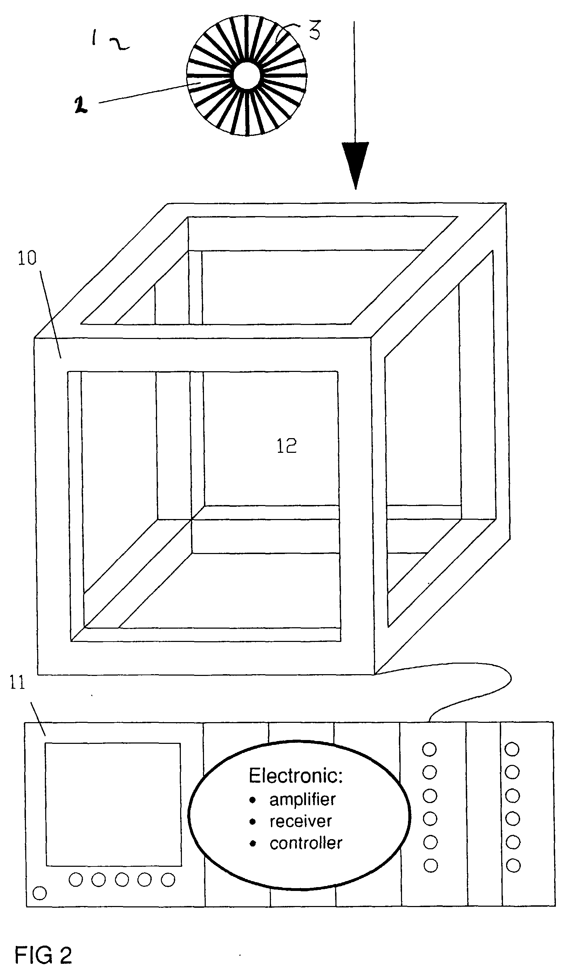

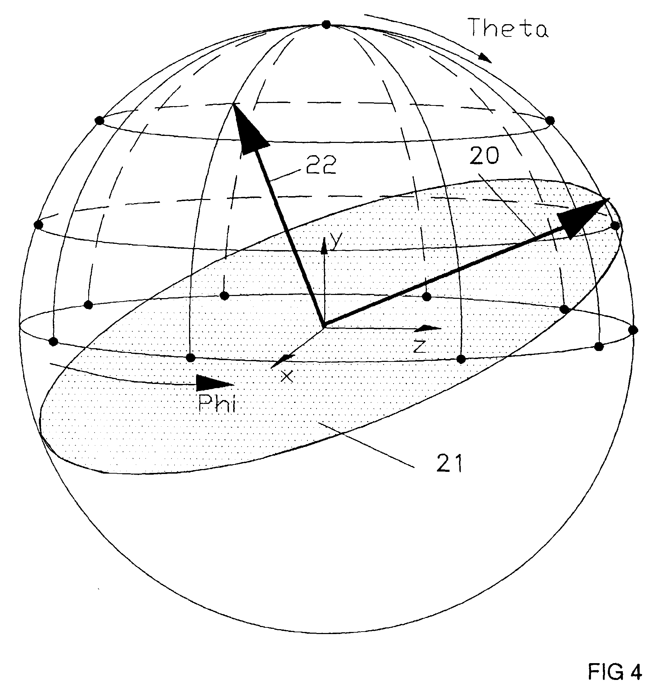

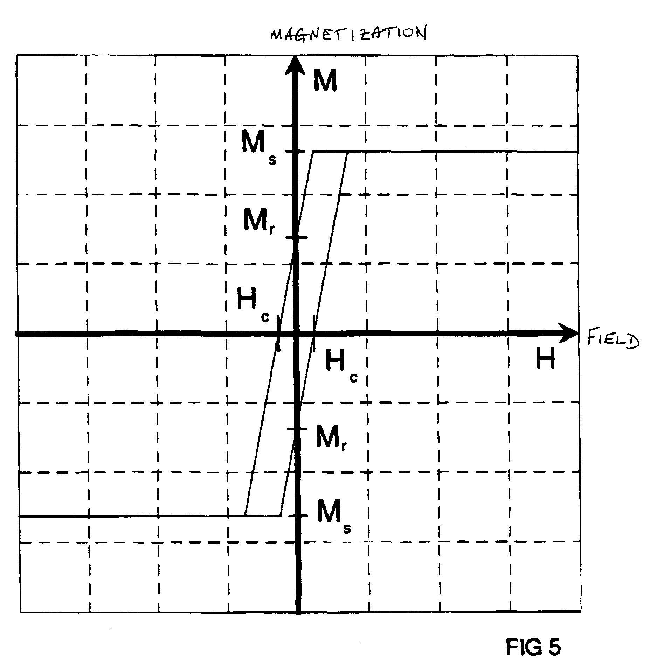

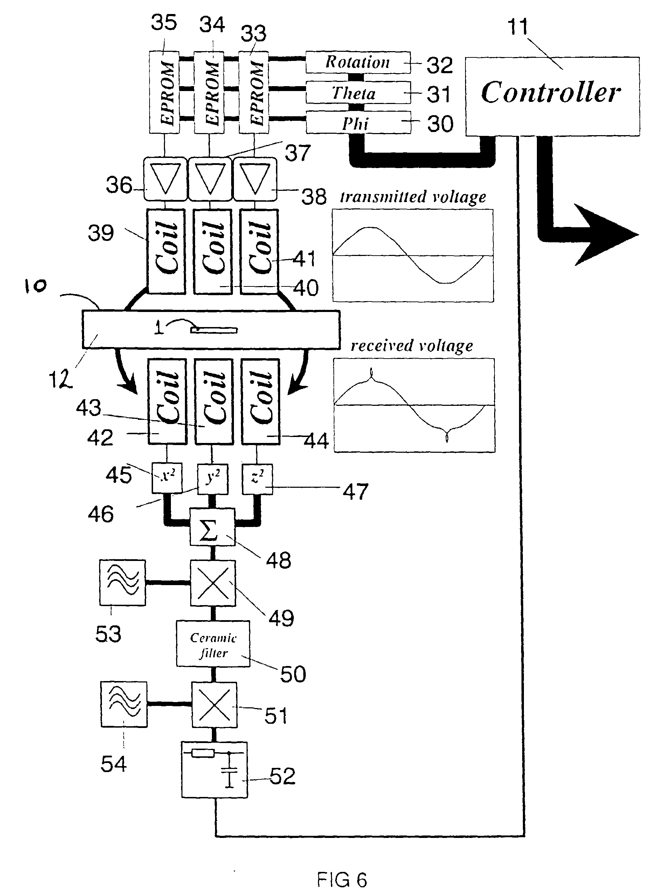

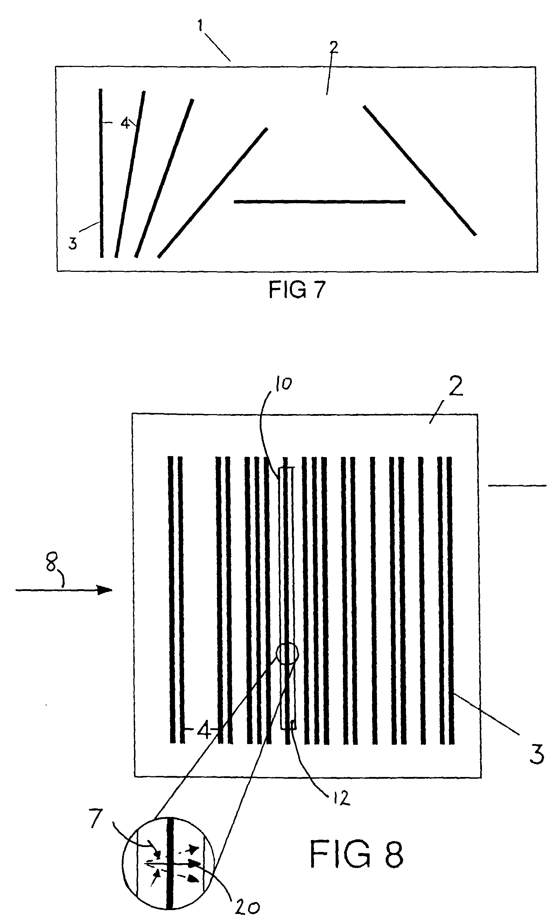

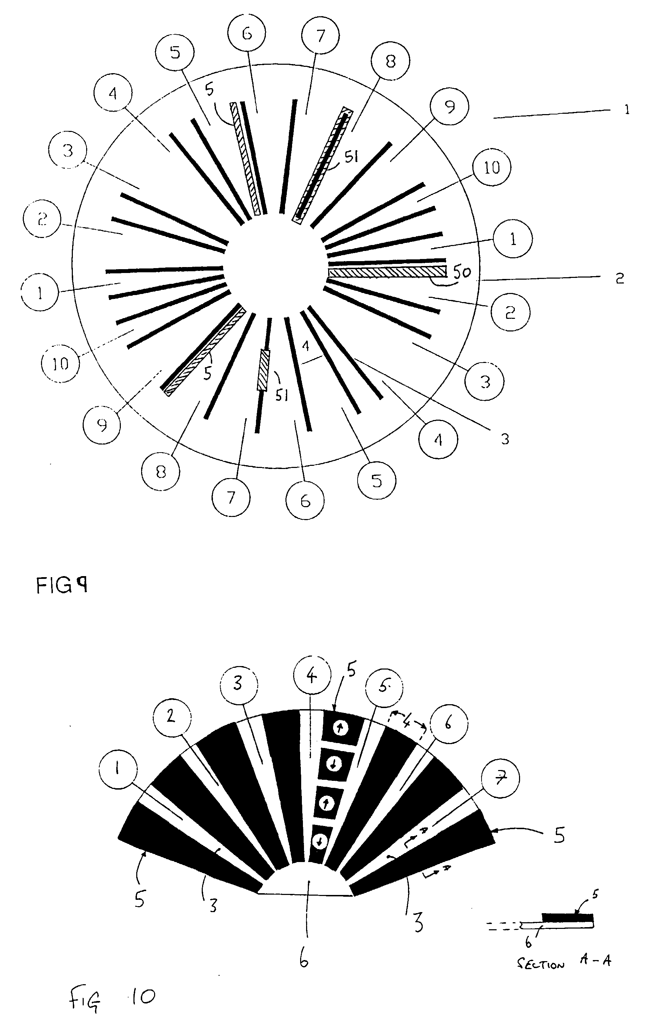

The interrogation zone 12 in accordance with this embodiment of the invention is shown in Fig. 2 in a schematic way. The zone 12 may be two or three dimensional. The zone 12 is defined by the frame 10 which includes coils for generating the magnetic field and also for detecting the change in magnetic direction of the elongate elements 3 of a marker 1. Such an interrogation zone 12 can be several cubic meters in size. The objects with the identification codes can be placed in the interrogation zone 12, may be introduced into the zone 12 on a conveyor belt or may be dropped into or through the interrogation zone 12. Alternatively the interrogation zone 12 may be moved relative to the object. The coils of the magnetic field generator 10,11 generate a magnetic field whose magnetic field vector 20 as shown in Fig. 4 has a substantially constant magnitude and moves through the 2- or 3-dimensional interrogation zone 12 and assumes a sequence of different orientations. The output of the detecting coils is fed to a controller and electronic signal processing device 11 for segregation of the detected pulses from stray noise. Pulse wave shaping circuits may improve pulse quality to output the signal sequence as shown in Fig. 3. The orientations of the magnetic field vector 20 may be selected randomly or may follow any particular regular sequence. The magnetic field vector 20 may also oscillate through a small angle at each orientation. The controller and electronic signal processing device may include means to record each particular orientation of the magnetic field vector with which a pulse is generated. From this information it is then possible to identify magnetic field vector directions which produced pulses in the detecting coils and to reconstruct the data to identify pulses which came from a marker in any particular plane. Thus a sequence of pulses detected by the detecting coils can be generated which follow a time pattern which is related in a one-to-one relationship with the spatial separation of the elongate elements 3 on the marker 1. A sequence of pulses is then obtained as shown in Fig. 3. The means for determining the orientation of the magnetic field vector 20 at which a pulse is produced may also be provided by pre-selecting the sequence of directions of the magnetic field vector 20 so that the magnetic field vector 20 moves regularly through the interrogation zone 12. It is then merely necessary to record the time sequence of the pulses in order to infer the corresponding directions of the magnetic field vector 20. The pulse sequence may be fed to logic circuits in order to convert the time sequence of pulses into a binary number or other identification code.

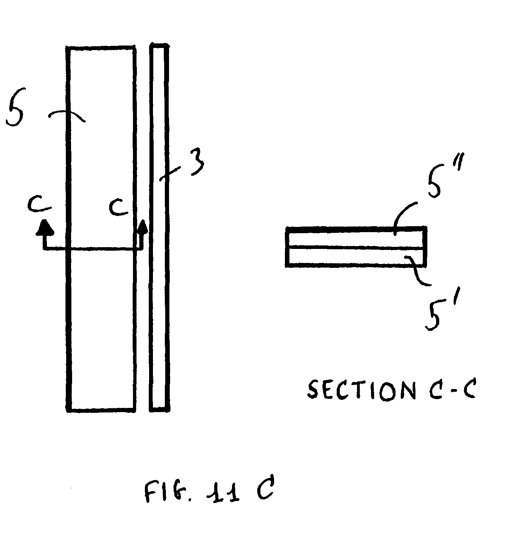

A preferred eighth embodiment of the present invention including the magnetic field generating device 10,11 will be described with reference to Figs. 2 and 6 and may be used with any of the embodiments of the invention. Preferably six coils are arranged in the frame 10 to form three mutually opposing and orthogonal pairs of coils. The frame 10 in Fig. 2 is shown in a rectangular form but the invention is not limited thereto. The frame 10 may have arcuate members or may include separate frames fixed in a spatial arrangement. By controlling the magnitude, frequency, wave form and phase of the current fed to each coil any particular orientation of the magnetic field vector can be generated in the interrogation zone 12. Preferably currents having the form of a sine wave are applied from the controller 10,11 to three orthogonal coils of the mutually opposed and orthogonally arranged pairs of coils as shown schematically in Fig. 6. The necessary currents can either be calculated by means of a microprocessor or computer (not shown) or the required currents may be read from pre-stored information in memory devices (PROM, EPROM, EEPROM etc.) 33 - 35 as shown in Fig. 6.

The magnetic field vector 20 may traverse continuously through the 3-dimensional domain shown in Fig. 4 however it is sufficient for the invention if the magnetic field vector 20 traverses the 3-dimensional domain by taking up a series of discrete orientations whereby the change between each orientation of the magnetic vector 20 should be sufficiently small to be able to detect the angular difference 4 between elongate elements 3 on the marker 1 of Fig. 1 or Figs. 7, 9 and 10.

The magnetic field generator 10,11 in accordance with the invention may be designed to produce a magnetic field which has a magnitude in the range 5 to 400 Gauss. With a system including a marker 1 having a linear code as shown in Fig 8, the magnetic field vector 20 may oscillate through a small angle which is sufficient to generate a pulse from an elongate element 3. With a system including the marker 1 having a radial or angular code (Figs. 1 and 7, 9 and 10), the magnetic field vector 20 may rotate about the axis 22 in the plane 21 as shown in Fig.4.

In a preferred ninth embodiment of the invention the magnetic field generating device 10,11 in accordance with the invention is adapted to rotate the magnetic field vector 20 in a plane 21 and after each rotation the plane 21 is changed to a new orientation. It is particularly suited for use with embodiments of the invention with angular spaced codes. The normal 22 to the plane 21 is made to traverse continuously or in discrete steps through the complete 360° of a sphere (see Fig. 4). In one complete traverse of the 3-dimensional interrogation zone, the plane of rotation 21 of the magnetic field vector 20 coincides at least once with any arbitrary plane in the 3-dimensional interrogation zone 12. As the magnetic field vector 20 rotates in this particular plane it will „read out" the code of any marker 1 in this plane. When the plane of rotation 21 does not move continuously but assumes different discrete orientations exact coincidence is not achieved with every arbitrary orientation but the number of discrete orientations in the sequence is chosen to be so great that the discrepancy between arbitrary and achieved orientation is smaller than the system detection tolerance.

According to the ninth embodiment of the present invention the plane 21, in which the magnetic field rotates (see shaded area in Fig. 4), rotates through the orthogonal spherical polar co-ordinates $\vartheta$ and $\Phi$ in the interrogation zone with frequencies $\beta$ and $\omega$. Further the magnetic field vector 20 rotates about the axis 22 with a frequency $\alpha$. It is preferable if the frequencies are chosen so that: $\alpha > \beta > \omega$. The frequency $\omega$ may be in the range 0 to 1000 Hz, the frequency $\beta$ may be in the range 10 to 9000 Hz and preferably 30 to 50 Hz whereas the magnetic field vector 20 may rotate in the plane 21 at a frequency a which may be 5 to 1000 times and preferably 10 to 60 times greater than the rotation frequency $\beta$ of the plane 21 of the magnetic field. At high rotational frequencies the rotating field vector 20 reads out the code of any marker 1 of the type similar to those shown in Figs. 1 and 7 several times before the plane any marker 1 of the type similar to those shown in Figs. 1 and 7 several times before the plane of rotation 21 moves to a new orientation, thus reading the marker 1 several times. The repetition of detected pulses improves the reliability of correct code identification. The exact frequencies of the rotational movement of the magnetic field vector 20 and the traversing frequency of the plane of rotation 21 of the magnetic field are not however critical to the invention and the invention is not limited to the frequency values quoted above. It is advantageous if the movements of the magnetic field vector 20 are phase locked to each other e.g. by PLL circuits or digital oscillators, so that there is a one-to-one relationship between the time in any one cycle of the traverse of the magnetic field vector 20 through the interrogation zone 12 and the direction of the magnetic field vector 20. The means for determining the direction of the magnetic field vector 20 is then provided by maintaining the time sequence of the induced pulses.

A modification of the ninth embodiment of the invention will be described with reference to Fig. 6. The controller 11 generates currents which are fed to the coils 39 to 41 via amplifiers 36 to 38. The required values of current are read from the EPROMS 33 to 35 by the address circuits 30 to 32. The magnetic field generated by the coils 39 to 41 rotates continuously in a plane. After a rotation, the currents are altered to change the inclination of the plane, i.e. one or both of the spherical polar co-ordinates $\vartheta$, $\Phi$ is incremented. This procedure is repeated until a complete sphere has been traversed, i.e. all desired combinations of individual values of $\vartheta$, $\Phi$ have been traversed.

In accordance with any of the embodiments of the invention, as the magnetic field vector traverses through the 3-dimensional space of the interrogation zone 12, the particular orientation of the marker 1 is not critical to the success of detection as at some point in the cycle the orientation of the plane of translation of the magnetic field vector will lie sufficiently close to the plane of the marker 1 that detection and reading of the code are possible.

The above description of the invention relates to moving the magnetic field vector 20 relative to the marker 1. However the invention also includes moving the marker relative to a magnetic field. For instance the marker 1 of the type shown in Figs. 1 and 7, 9 and 10 may be placed on a rotating turntable in a static magnetic field. Any form of relative movement between the marker 1 and the magnetic field vector 20 which results in a change in the orientation of the magnetic field vector 20 relative to the marker 1 such that a plurality of such orientations is generated in a sequence is included within the invention.

In accordance with a preferred tenth embodiment of the present invention the interrogation zone 12 may be rectangular and may have approximately the same width as the smallest distance between two elongate elements 3 as shown in Fig. 8. Within the interrogation zone the magnetic field vector 20 oscillates through a small angle 7 which may be $\pm 5°$. As shown in Fig. 8 in magnetic field vector 20 lies in the plane of the marker 1 substantially perpendicular to the elongate elements 3. This is however not necessary for the invention. The coils my be arranged above and below the plane of the marker 1 so that a field is produced whose vector lies in a second plane substantially perpendicular to the plane of the marker 1. The magnetic field vector is then made to oscillate through a small angle 7 in this second plane. As the marker 1 is moved relative to the interrogation zone 12 in the direction 8, pulses are generated by each elongate element as it is included within the interrogation zone. The interrogation zone of the tenth embodiment may also be applied to any of the markers 1 described with respect to the first to sixth embodiments.

In accordance with a preferred eleventh embodiment of the present invention the detection system in accordance with the invention includes a separate detection coil or coils arranged in the frame 10 of Fig. 2 or makes use of one or more of the field generating coils for detection purposes and may be used with any of the embodiments of the invention or separately. As shown in Fig. 6 the outputs of three orthogonal coils 42 - 44 are used for detection and appear as distorted sine waves when a marker is in the interrogation zone 12. The individual pulses generated from a particular elongate soft ferromagnetic element are superimposed on the fundamental sine wave along with random noise and pulses generated from discharge across small gaps, etc. The magnitude of the magnetic field vector is calculated from the squares of the outputs of the coils 42 - 44 generated in circuits 45 - 47. The outputs of the circuits 45 - 47 are summed in the adder 48 to produce a combined signal. The combined signal is then fed to a superheterodyne receiver circuit 49 - 54. A first oscillator 53 generates a signal with an intermediate frequency (typically 455 kHz). The product of the intermediate frequency and the combined signal is generated in the mixer 49. The output of the mixer 49 is fed to a ceramic filter 50. The output of the ceramic filter 50 is demodulated in the demodulator circuit 51,52,54 by multiplying the output of the ceramic filter 50 with the intermediate frequency from the oscillator 54 in the mixer 51 and supplying the multiplied signal to a low-pass filter 52. The procedure described above is well known to the person skilled in AM-Receiver technology (see for example „Introduction to Communication Systems" by Ferrel G. Stremler, Addison-Wesley Publishing Company, Third Edition, 1990). The pulse chain from the low-pass filter 52 is fed to the controller 11 from which it may be sent to an external computer (not shown) for further analysis and decoding.

Any particular direction of the magnetic field vector 20 may be determined from the phases of the output coils 42 to 44 (not shown). Thus the means for determining the orientation of the magnetic field vector 20 may be a circuit for comparing the relative phases of the outputs of coils 42 to 44 and may be included in the control device 10,11 or in a separate micro-processor or computer (not shown).

In accordance with the embodiments of the invention the scanning rate of the magnetic field can be made sufficiently high that the velocity or acceleration of the object with marker 1 within the interrogation zone 12 does not effect the identification of the code. In a preferred twelfth embodiment of the invention which may be used with any of the embodiments of the invention, a synchronised code may be used. In the case of the marker in accordance with Fig. 8 this could be achieved by a separate timing code parallel with the main information code. Alternatively and preferably, the main code is a self-clocking code as described for instance in EP-0472842. Such a code may be divided into coded sections of equal length, an elongate element 3 being placed at the beginning of each section (e.g. BC 412 of EP-0472842) for synchronising. The control device 10,11 may be adapted to identify the synchronisation pulses and to compensate for velocity variations when detecting different sections of the code in accordance with the difference in time between synchronisation pulses.

**Claims**

1. A **device** for generating a magnetic field within a predetermined interrogation zone, comprising:

   means for generating a magnetic vector of said magnetic field having a substantially constant magnitude;
   means for varying the orientation of said magnetic field vector within said interrogation zone; and
   means for determining the magnitude of said magnetic field vector.

2. Generating device accoding to claim 1, further comprising at least one coil, the magnetic field generated by said coil defining said interrogation zone, and a controller for supplying electric currents to said coil.

3. Generating device according to claim 2, wherein said coil includes three pairs of opposed and mutually orthogonal coils.

4. Generating device according to claims 2 or 3, wherein said controller is adapted to supply electric currents to said at least one coil to vary the orientation of said magnetic field vector continuously and smoothly in said interrogation zone.

5. Generating device according to claims 2 or 3, wherein said controller is adapted to supply electric currents to said at least one coil to vary the orientation of said magnetic field vector in a predetermined sequence of discrete orientations in said interrogation zone.

6. Generating device according to any of claims 2 to 5, wherein said controller is adapted to supply electric currents to said at least one coil to generate a rotating magnetic field.

7. A **marker** for a remote identification system comprising:

   a plurality of elongate soft ferromagnetic elements fixedly arranged in a pre-formed spatial relationship to each other, said spatial relationship being pre-selected to define a code;
   said elongate soft ferromagnetic elements each having a low magnetic resistance (high magnetic susceptibility) and being separated from each other by areas of high magnetic resistance (low magnetic susceptibility); and
   each of said elongate soft ferromagnetic elements having at least one state in which the magnetising direction of said elongate soft ferromagnetic element is reversible when the relative orientation between said marker and a magnetic field vector of a magnetic field having a substantially constant magnitude is varied.

8. Marker according to claim 7, wherein said elongate soft ferromagnetic elements are in an angular relationship to each other, the angular separations between the elongate soft ferromagnetic elements defining said code.

9. Marker in accordance with claim 7 or 8, wherein said code is a self-clocking code.

**10.** Marker in accordance with any of claims 7 to 9 wherein at least one of said elongate soft ferromagnetic elements is magnetically coupled to a keeper element.

**11.** A **system** for remote identification of objects, each said object being provided with an identification means and being disposed to pass through an interrogation zone, said identification means including at least one elongate element of a soft ferromagnetic material, said soft ferromagnetic elongate element having a low magnetic resistance (high magnetic susceptibility) and being surrounded by an area of high magnetic resistance (low magnetic susceptibility), comprising:

means for generating a magnetic field having a magnetic field vector with a substantially constant magnitude in said interrogation zone; means for varying the relative orientation between said magnetic field vector and said object in said interrogation zone; and means for detecting a change in the magnetising direction of said at least one elongate soft ferromagnetic element.

**12.** System according to claim 11, wherein said identification means includes a plurality of elongate soft magnetic elements arranged in a pre-formed spatial relationship to each other, said spatial relationship defining a code and said elongate soft magnetic elements being separated from each other by areas of high magnetic resistance (low magnetic susceptibility).

**13.** System according to claim 11 or 12, wherein said magnetic field is a rotating field.

**14.** System according to any of claims 11 to 13, further comprising means for determining the orientation of said magnetic field vector.

**15.** System according to any of claims 11 to 14, further comprising means to determine the magnitude of said magnetic field vector.

**16.** A **method** of remote identification of objects, each object being provided with an identification means and being disposed to pass through an interrogation zone, said identification means including at least one elongate element of a soft ferromagnetic material, said elongate soft magnetic element having a low magnetic resistance (high magnetic susceptibility) and being surrounded by an area of high magnetic resistance (low magnetic susceptibility), comprising the steps of:

generating a magnetic field having a magnetic field vector within said interrogation zone, said magnetic field vector having a substantially constant magnitude; varying the relative orientation between said magnetic field vector and said object in said interrogation zone, and detecting a change in the magnetising direction of said elongate soft ferromagnetic element.

**17.** Method according to claim 16, wherein said identification means includes a plurality of elongate soft ferromagnetic elements, said elongate soft ferromagnetic elements being arranged in a spatial relationship to each other and said spatial relationship defining a code, said elongate soft ferromagnetic elements being separated from each other by areas of high magnetic resistance (low magnetic susceptibility), and said detecting step includes detecting the changes in magnetising direction of said elongate soft ferromagnetic elements in sequence.

**18.** Method according to claims 16 or 17, wherein said magnetic field vector is rotated.

FIG 1

amplitude

time

Start 0 1 0 1 1 1 1 1 Stop Start 0

check
bit

Information

47

FIG 3

Electronic:
- amplifier
- receiver
- controller

FIG 2

FIG 4

FIG 5

FIG 6

FIG 7

FIG 8

FIG 9

SECTION A-A

FIG 10

FIG. 11 A          FIG. 11 B

EP 1 039 412 A1

EP 1 039 412 A1

5

3

5"

5'

SECTION C-C

FIG. 11 C

FIG. 11D

SECTION D-D

EP 1 039 412 A1

FIG. 11 E

FIG. 11 F

**European Patent Office**

## EUROPEAN SEARCH REPORT

**Application Number**

EP 00 10 6562

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 319 674 A (RIGGS,D.D. ET AL.) 16 March 1982 (1982-03-16) * claim 1; figure 1A * | 7,8 | G06K19/06 |
| A | US 5 204 526 A (YAMASHITA,M. ET AL.) 20 April 1993 (1993-04-20) * column 4, line 29 - line 44 * * column 7, line 31 - line 37 * | 3,6,7, 13,16,18 | |
| A | GB 2 098 768 A (GOVERNOR AND COMPANY OF THE BANK OF ENGLAND) 24 November 1982 (1982-11-24) * claim 1 * | 7,11,17 | |
| D,A | US 4 746 908 A (MONTEAN,S.) 24 May 1988 (1988-05-24) * column 6, line 36 - line 40 * | 7,11 | |
| A | US 4 622 542 A (WEAVER JON N) 11 November 1986 (1986-11-11) * column 2, line 60 - line 64 * * column 4, line 11 - line 18 * * column 6, line 16 - line 20 * * claims 1,8,11 * | 1,7,16, 17 | |
| A | US 5 353 010 A (SANETRA JUERGEN) 4 October 1994 (1994-10-04) * claims 1,11 * | 1,16 | TECHNICAL FIELDS SEARCHED (Int.Cl.7) G06K |

The present search report has been drawn up for all claims

| Place of search | Date of completion of the search | Examiner |
|---|---|---|
| THE HAGUE | 26 June 2000 | Herskovic, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 10 6562

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2000

| Patent document cited in search report | | Publication date | Patent family member(s) | | Publication date |
|---|---|---|---|---|---|
| US 4319674 | A | 16-03-1982 | NONE | | |
| US 5204526 | A | 20-04-1993 | JP | 2290589 A | 30-11-1990 |
| | | | DE | 3930946 A | 26-04-1990 |
| GB 2098768 | A | 24-11-1982 | NONE | | |
| US 4746908 | A | 24-05-1988 | AU | 589796 B | 19-10-1989 |
| | | | AU | 7654087 A | 24-03-1988 |
| | | | CA | 1277384 A | 04-12-1990 |
| | | | DE | 3784822 A | 22-04-1993 |
| | | | DE | 3784822 T | 12-08-1993 |
| | | | DK | 490887 A | 20-03-1988 |
| | | | EP | 0260831 A | 23-03-1988 |
| | | | HK | 149094 A | 06-01-1995 |
| | | | JP | 2869065 B | 10-03-1999 |
| | | | JP | 63083899 A | 14-04-1988 |
| | | | KR | 9602143 B | 13-02-1996 |
| | | | MX | 161738 A | 20-12-1990 |
| | | | ZA | 8707050 A | 26-04-1989 |
| US 4622542 | A | 11-11-1986 | AU | 584433 B | 25-05-1989 |
| | | | AU | 5927386 A | 08-01-1987 |
| | | | CA | 1232647 A | 09-02-1988 |
| | | | DK | 95787 A | 25-02-1987 |
| | | | EP | 0228467 A | 15-07-1987 |
| | | | ES | 556942 D | 01-04-1988 |
| | | | ES | 8802098 A | 01-06-1988 |
| | | | ES | 557786 D | 01-03-1988 |
| | | | ES | 8801745 A | 16-04-1988 |
| | | | ES | 557787 D | 01-03-1988 |
| | | | ES | 8801743 A | 16-04-1988 |
| | | | FI | 870734 A | 20-02-1987 |
| | | | NO | 870606 A | 16-02-1987 |
| | | | WO | 8700324 A | 15-01-1987 |
| US 5353010 | A | 04-10-1994 | DE | 4200082 A | 08-07-1993 |